# EUROPEAN PATENT APPLICATION

(11) **EP 2 239 158 A1**
(43) Date of publication of application: **13.10.2010**
(21) Application number: 10158179.1
(22) Date of filing: 29.03.2010
(51) Int. Cl.: B60H 1/00, F25B 21/02

(54) **Vehicle air conditioner**

(30) Priority: 09.04.2009 JP 2009094734; 24.08.2009 JP 2009193570
(71) Applicant: Kabushiki Kaisha Toyota Jidoshokki, Kariya-shi, Aichi 448-8671 (JP)
(72) Inventor: Suzuki, Junya, Kariya-shi Aichi 448-8671 (JP); Yokomachi, Naoya, Kariya-shi Aichi 448-8671 (JP); Kawaguchi, Masahiro, Kariya-shi Aichi 448-8671 (JP); Nishimori, Noritaka, Kariya-shi Aichi 448-8671 (JP); Morisaku, Naoto, Kariya-shi Aichi 448-8671 (JP); Akiyama, Hirokuni, Kariya-shi Aichi 448-8671 (JP)
(74) Representative: TBK-Patent

(57) **Abstract**

A vehicle air conditioner includes a heat storage unit (2,20) having a heat storage medium, a first heat exchanger (3) for heat exchange with air that is sent out of the vehicle, a second heat exchanger (60) for heat exchange with air that is sent to the vehicle compartment, and a peltier device (6). The heat storage unit has a first inlet port and a first outlet port through which heat exchange medium flows in and out of the heat storage unit where heat is exchanged between the heat storage medium and the heat exchange medium. The peltier device (6) is operable to provide one of positive heat and negative heat to the heat exchange medium flowing through the heat storage unit and also to provide the other of the positive heat and the negative heat directly or indirectly to the first heat exchanger (3).

## Description

### BACKGROUND OF THE INVENTION

The present invention relates to a vehicle air conditioner.

Japanese Unexamined Patent Application Publication No. 6-99724 discloses a conventional vehicle air conditioner including a heat storage unit and a blower. The heat storage unit has a heat storage medium such as paraffin that is capable of storing positive heat or negative heat. The heat storage unit further has therein a heat source for supplying heat to the heat storage medium. The heat source is connected to an energy supply that is provided inside or outside the vehicle. The heat source is supplied with positive heat or negative heat from the energy supply. The blower is provided near the heat storage unit to supply the air around the heat storage unit to the vehicle compartment.

In such air conditioner, when the heat storage medium stores negative heat, the vehicle compartment may be cooled by operating the blower while the vehicle is in use. When the heat storage medium stores positive heat, the vehicle compartment may be heated by operating the blower while the vehicle is in use.

Another vehicle air conditioner is disclosed in Japanese Unexamined Patent Application Publication No. 2001-304633. The air conditioner includes a heat storage unit, a heat exchanger and a peltier device.

The heat storage unit has a heat storage medium and is insulated from the outside air. The heat storage unit further has a first heat sink including a flow passage and formed with a first outlet port and a first inlet port. Heat exchange medium flows through the first inlet port into the first heat sink where heat is exchanged between the heat storage medium and the heat exchange medium. The heat exchange medium then flows through the first outlet port out of the first heat sink. The first outlet port is connected to a first pipe, and the first inlet port is connected to a second pipe.

The air around the heat exchanger is supplied to the vehicle compartment. The heat exchanger has a second outlet port and a second inlet port that are connected through a third pipe. Heat exchange medium flows through the second inlet port into the heat exchanger and then through the second outlet port out of the heat exchanger. The third pipe is connected to a second heat sink including a flow passage.

The peltier device is operable to provide one of positive heat and negative heat to the first heat sink and the other of the positive heat and the negative heat to the second heat sink. The first pipe is connected to the third pipe through a first valve on one side of the peltier device, and the second pipe is connected to the third pipe through a second valve on the other side of the peltier device. The third pipe is provided with a pump for delivering heat exchange medium. The peltier device, the first valve and the second valve are controlled by a controller.

When the air conditioner is not in use, the controller operates the first and second valves so that the second outlet port is connected to the second inlet port through the second heat sink, the first outlet port is disconnected from the second inlet port, and the second outlet port is disconnected from the first inlet port. In such condition, the peltier device operates under the control of the controller so as to absorb heat from the heat exchange medium in the first heat sink thereby to provide negative heat and to release heat to the heat exchange medium in the second heat sink thereby to provide positive heat. Thus, negative heat is stored in the heat storage medium of the heat storage unit while the heat exchange medium having positive heat is being circulated between the heat exchanger and the second heat sink through the third pipe.

When the air conditioner is in use, the first outlet port is connected to the second inlet port, the second outlet port is connected to the first inlet port, and the second outlet port is connected to the second inlet port through the first heat sink. The heat exchange medium having negative heat is circulated between the heat exchanger and the first heat sink through the first, second and third pipes, so that the vehicle compartment is cooled by the negative heat stored in the heat storage medium of the heat storage unit.

In the air conditioner disclosed in Japanese Unexamined Patent Application Publication No. 6-99724, the heat source using parts such as an electric heater of a linear or planar shape, a water pipe, hot water pipe or heat pipe through which heat exchange medium flows for heat conduction becomes large and complex in structure. Such large and complex structure makes it difficult to mount the air conditioner in a vehicle.

If a peltier device is used as the heat source, the size of the air conditioner is reduced, which makes it easier to mount the air conditioner in a vehicle. Further, the heat provided by the peltier device may be changed between positive heat and negative heat by reversing the polarity of electrical current, and the use of the peltier device may facilitate temperature control in the air conditioner, accordingly.

However, the provision of the peltier device in the heat storage unit for heat supply to the heat storage medium does not necessarily result in efficient cooling and heating of the heat storage medium in the heat storage unit, because the peltier device is operable to simultaneously absorb and release heat. Thus, it is difficult for the air conditioner to provide satisfactory air conditioning of the vehicle compartment.

It is also difficult for the air conditioner disclosed in Japanese Unexamined Patent Application Publication No. 2001-304633 to offer satisfactory air conditioning of the vehicle compartment. Specifically, while the negative heat is being stored in the heat storage medium, the peltier device absorbs heat from the heat exchange medium in the first heat sink while releasing heat to the heat exchange medium in the second heat sink. Thus, during the cooling operation of the air conditioner, the heat exchange medium, which has been cooled by the heat storage medium of the heat storage unit, is heated by the heat exchange medium in the heat exchanger and the third pipe, which may result in insufficient cooling of the vehicle compartment.

The present invention is directed to providing a vehicle air conditioner that allows easier mounting in a vehicle and temperature controlling and also allows efficient heat storage in a heat storage unit for efficient air conditioning of a vehicle compartment.

### SUMMARY OF THE INVENTION

In accordance with an aspect of the present invention, a vehicle air conditioner includes a heat storage unit, a first pipe, a first heat exchanger, a second heat exchanger, a first valve, a second valve, a second pipe, a third pipe, a peltier device, a first pump and a controller. The heat storage unit has a heat storage medium thermally insulated from the outside. The heat storage unit has a first inlet port and a first outlet port through which heat exchange medium flows in and out of the heat storage unit where heat is exchanged between the heat storage medium and the heat exchange medium. The first pipe is connected to the first outlet port and the first inlet port. The first heat exchanger is provided for heat exchange with air that is sent out of the vehicle. The second heat exchanger is provided for heat exchange with air that is sent to the vehicle compartment. The second heat exchanger has a second inlet port and a second outlet port through which the heat exchange medium flows in and out of the second heat exchanger. The first valve and the second valve are respectively provided on the first pipe. The second pipe connects the second outlet port to the first valve. The third pipe connects the second inlet port to the second valve. The peltier device is operable to provide one of positive heat and negative heat to the heat exchange medium flowing in the first pipe and also to provide the other of the positive heat and the negative heat directly or indirectly to the first heat exchanger. The first pump is provided for delivering the heat exchange medium in the first pipe. The controller is provided for controlling the operation of the peltier device, the first valve and the second valve. When the air conditioner is not in use the first and second valves are operated so that the first outlet port is connected to the first inlet port, the first outlet port is disconnected from the second inlet port, and the second outlet port is disconnected from the first inlet port. When the air conditioner is in use the first and second valves are operated so that the first outlet port is connected to the second inlet port, the second outlet port is connected to the first inlet port, and the first pipe between the first outlet port and the first inlet port is disconnected.

Other aspects and advantages of the invention will become apparent from the following description, taken in conjunction with the accompanying drawings, illustrating by way of example the principles of the invention.

### BRIEF DESCRIPTION OF THE DRAWINGS

Fig. 1 is a schematic view of a vehicle air conditioner according to the embodiments of the present invention when the vehicle air conditioner is not in use;
Fig. 2 is a schematic view of the vehicle air conditioner when it is in use;
Fig. 3 is a schematic sectional view of a first embodiment of the vehicle air conditioner, showing a heat storage unit of the vehicle air conditioner when it is not in use;
Fig. 4 is a block diagram of components connected to a controller of the vehicle air conditioner of Fig. 3;
Fig. 5 is a schematic sectional view of a heat storage unit of the vehicle air conditioner of Fig. 3 when it is not in use and positive heat or negative heat is being stored;
Fig. 6 is a schematic sectional view of the heat storage unit of Fig. 5 when the vehicle air conditioner is in use;
Fig. 7 is a schematic sectional view of a second embodiment of the vehicle air conditioner, showing a heat storage unit of the vehicle air conditioner when it is not in use and positive heat or negative heat is being stored;
Fig. 8 is a schematic sectional view of the heat storage unit of Fig. 7 when the vehicle air conditioner is in use;
Fig. 9 is a schematic sectional view of a third embodiment of the vehicle air conditioner, showing a heat storage unit of the vehicle air conditioner when it is not in use;
Fig. 10 is a schematic sectional view of the heat storage unit of Fig. 9 when the vehicle air conditioner is in use;
Fig. 11 is an enlarged schematic sectional view of the heat storage unit of Figs. 9 and 10;
Fig. 12 is an enlarged schematic sectional view of a jacket of the heat storage unit of Figs. 9 and 10; and
Fig. 13 is a schematic sectional view of a fourth embodiment of the vehicle air conditioner, showing a heat storage unit of the vehicle air conditioner when it is not in use.

### DETAILED DESCRIPTION OF THE PREFERRED EMBODIMENTS

The following will describe the embodiments of the present invention with reference to the accompanying drawings.

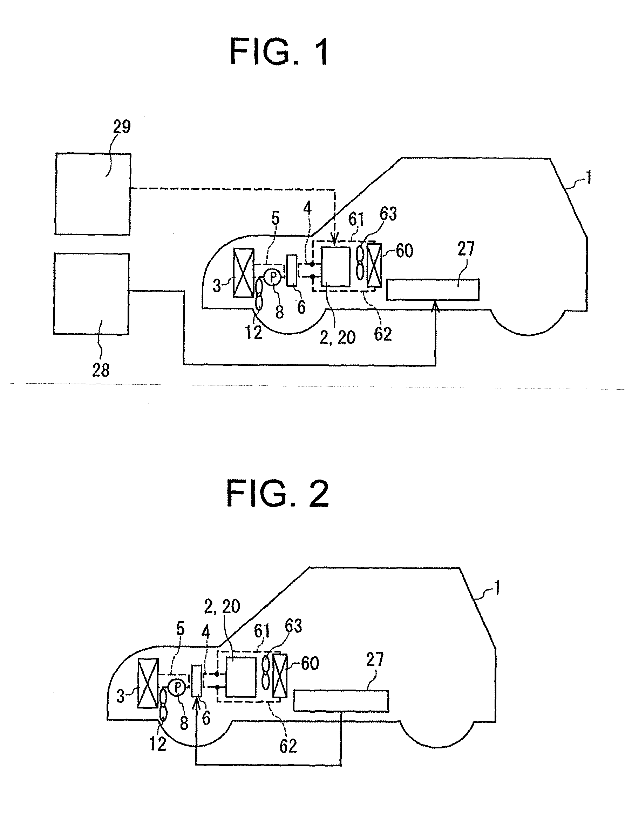

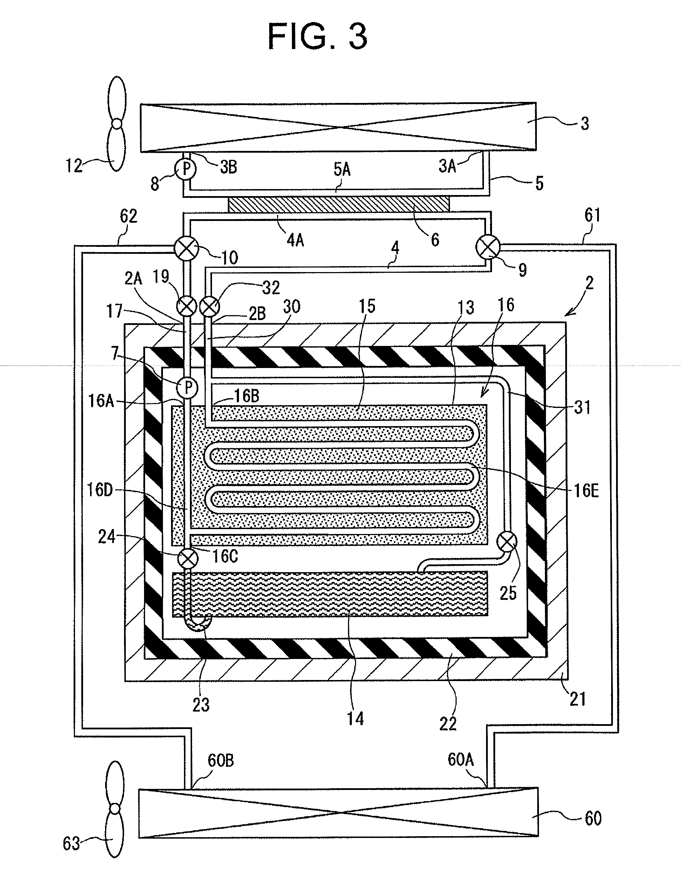

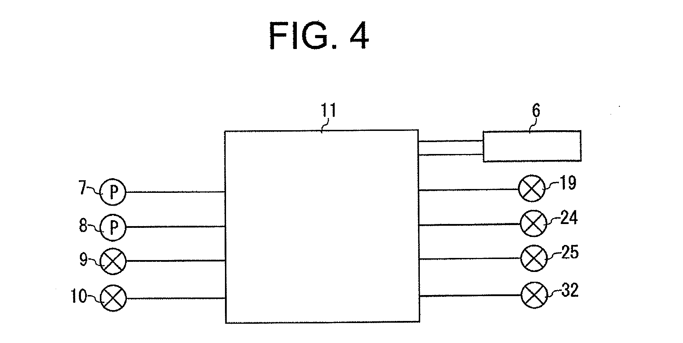

Referring to Figs. 1 and 2, a vehicle air conditioner (hereinafter referred to merely as air conditioner) according to the first embodiment of the present invention is provided in a vehicle 1 such as a hybrid or electric vehicle. The air conditioner includes a heat storage unit 2, a first heat exchanger 3, a second heat exchanger 60, a first pipe 4, a delivery pipe 5, a second pipe 61, a third pipe 62, a peltier device 6, a first pump 7 (see Fig. 3), a second pump 8, a first valve 9 (see Fig. 3), a second valve 10 (see Fig. 3), a controller 11 (Fig. 4), a first blower 12 for delivering the air around the first heat exchanger 3 out of the vehicle 1, and a second blower 63 for supplying the air around the second heat exchanger 60 to the vehicle compartment.

Referring to Fig. 3, the heat storage unit 2 has a housing 21 that is formed therethrough with a first outlet port 2A and a first inlet port 2B. A vacuum insulator 22 is mounted on the inner surface of the housing 21, and a heat storage tank 13 and a reservoir tank 14 are disposed within the vacuum insulator 22. As shown in Fig. 3, the reservoir tank 14 is located below the heat storage tank 13.

The heat storage tank 13 is filled with a heat storage medium 15 such as paraffin that is capable of storing positive heat or negative heat. A heat exchange pipe 16 is provided in the heat storage tank 13. The reservoir tank 14 and the heat exchange pipe 16 are filled with water, which serves as heat exchange medium, and air.

The heat exchange pipe 16 has an outlet port 16A and an inlet port 16B arranged so as to be directed upward from the upper surface of the heat storage tank 13, and a communication port 16C directed downward from the lower surface of the heat storage tank 13. The outlet port 16A is connected to the communication port 16C through a vertically extending first portion 16D of the heat exchange pipe 16. The inlet port 16B is connected to a second portion 16E of the heat exchange pipe 16 extending in a serpentine pattern in the heat storage tank 13 and connected to the first portion 16D at a position above the communication port 16C.

The outlet port 16A of the heat exchange pipe 16 is connected to an outlet pipe 17 that extends through the vacuum insulator 22 to the first outlet port 2A of the housing 21. The part of the outlet pipe 17 that is located inside the vacuum insulator 22 is provided with a first pump 7. The part of the outlet pipe 17 that is located outside the housing 21 is provided with a valve 19. The outlet pipe 17 is connected to one end of the first pipe 4. The first pipe 4 includes plural straight portions 4A (only one being shown).

The inlet port 16B of the heat exchange pipe 16 is connected to an inlet pipe 30 that extends through the vacuum insulator 22 to the first inlet port 2B of the housing 21. The part of the inlet pipe 30 that is located inside the vacuum insulator 22 is connected to a branch pipe 31. The part of the inlet pipe 30 that is located outside the housing 21 is provided with a valve 32. The inlet pipe 30 is connected to the other end of the first pipe 4.

The communication port 16C of the heat exchange pipe 16 is connected to a communication pipe 23 that is open to the bottom of the reservoir tank 14. The communication pipe 23 is provided with a valve 24. The branch pipe 31 is open to the top of the reservoir tank 14. The branch pipe 31 is provided with a valve 25.

The first heat exchanger 3 has a fluid outlet port 3A and a fluid inlet port 3B connected to each other through the delivery pipe 5. The delivery pipe 5 is provided with the second pump 8 and includes plural straight portions 5A (only one being shown). The straight portion 4A of the first pipe 4 and the straight portion 5A of the delivery pipe 5 are arranged so as to face each other. The peltier device 6 is provided between the first pipe 4 and the delivery pipe 5 while in contact with the straight portions 4A and 5A.

The second heat exchanger 60 has a second outlet port 60A and a second inlet port 60B. The second outlet port 60A is connected to the first pipe 4 through the second pipe 61, and the second inlet port 60B is connected to the first pipe 4 through the third pipe 62. The first valve 9 is provided at the connection between the first and second pipes 4 and 61. The second valve 10 is provided at the connection between the first and third pipes 4 and 62. The first and second valves 9 and 10 are provided by a three-way valve connected to three passages and operable to allow fluid communication between any two passages while closing the remaining one passage.

Referring to Fig. 4, the second pump 8, the first valve 9, the second valve 10, the peltier device 6, the valve 19, the valve 32, the first pump 7, the valve 24, and the valve 25 are electrically connected to the controller 11.

As shown in Figs. 1 and 2, the vehicle 1 is provided with a battery 27. Electric power stored in the battery 27 is used for driving the vehicle 1.

While the air conditioner is not in use, for example, while the vehicle 1 is placed in a parking place of a house, the battery 27 is connected to a power source 28 for charging.

In a hot environment, a material suitable for storing negative heat is used for the heat storage medium 15. As shown in Fig. 1, a circulator 29 is connected to the heat exchange pipe 16 in the heat storage tank 13 of the heat storage unit 2 so as to replace the water in the heat exchange pipe 16 with cold water.

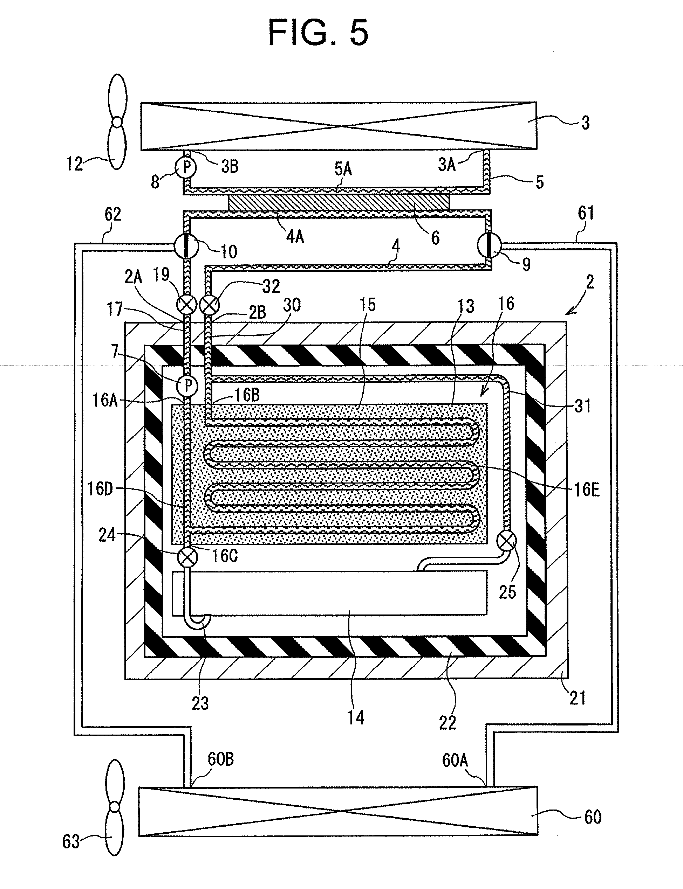

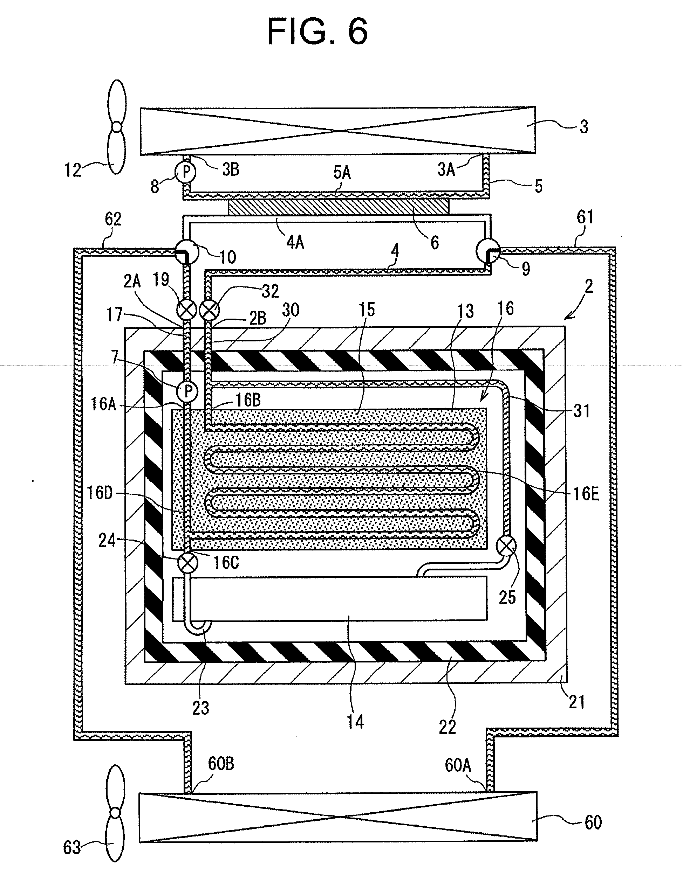

The heat exchange pipe 16 connected to the circulator 29 as shown in Fig. 1 is filled with cold water, as shown in Figs. 5 and 6. By doing so, the temperature of the water in the heat exchange pipe 16 becomes substantially equal to the temperature of the heat storage medium 15, which allows quick cooling in the air conditioner. Thus, the air conditioner allows cooling of water in various places such as a parking place of a home.

Cooling of water is performed depending on water temperature. When water is cooled to a predetermined temperature, cooling of water is stopped. Then the heat storage unit 2 is operated so that the heat exchange pipe 16 in the heat storage tank 13 becomes empty, as shown in Fig. 3, which will be described below.

With the heat exchange pipe 16 filled with water, the controller 11 operates the first and second valves 9 and 10 so that the first outlet port 2A is connected to the first inlet port 2B, the first outlet port 2A is disconnected from the second inlet port 60B and the second outlet port 60A is disconnected from the first inlet port 2B, as shown in Fig. 5.

In such condition, the peltier device 6 operates under the control of the controller 11 so as to absorb heat from the water in the first pipe 4 thereby to provide negative heat and also to release heat to the water in the delivery pipe 5 thereby to provide positive heat. As a result, the water flowing in the heat storage unit 2 is cooled and negative heat is stored in the heat storage medium 15. On the other hand, the water flowing in the first heat exchanger 3 is heated. The second pump 8 circulates the heated water between the first heat exchanger 3 and the delivery pipe 5. The heat of the first heat exchanger 3 is released by the first blower 12 into the surrounding air, so that the water flowing in the delivery pipe 5 is cooled.

In a condition that the vehicle 1 is running, as shown in Fig. 2, the battery 27 may be sufficiently charged. When the amount of negative heat stored in the heat storage medium 15 is decreased while the vehicle 1 is running, electric power is supplied from the battery 27 to the peltier device 6 so as to increase the amount of negative heat stored in the water and the heat storage medium 15, as shown in Fig. 2.

When the air conditioner is in use, for example, in the running vehicle 1, the valves 19, 24, 25, and 32 are opened and the first pump 7 is operated by the controller 11. The water in the reservoir tank 14 is moved through the communication pipe 23 and the valve 24 into the heat exchange pipe 16 (see Figs. 3 and 5).

When the reservoir tank 14 becomes empty, the valves 24 and 25 are closed, so that water is then circulated between the first pipe 4 and the heat exchange pipe 16. In such condition, the first and second valves 9 and 10 are operated by the controller 11 so that the first pipe 4 between the first outlet port 2A and the first inlet port 2B is disconnected, the first outlet port 2A is connected to the second inlet port 60B, and the second outlet port 60A is connected to the first inlet port 2B (see Fig. 6).

By doing so, the water with negative heat stored in the heat storage unit 2 is supplied to the second heat exchanger 60. In this case, such cold water is not heated by the water in the second heat exchanger 60, the first pipe 4, the second pipe 61 and the third pipe 62 which has not been heated by the peltier device 6. Then the second blower 63 is operated, so that the vehicle compartment is cooled. While the vehicle compartment is cooled, the second pump 8 is stopped.

When the vehicle 1 arrives at a destination and is parked in a parking place where there is no power source available for the heat storage unit 2 and the battery 27, the valves 19, 24, 25 and 32 are opened the first pump 7 is stopped by the controller 11. The water in the heat exchange pipe 16 is moved by its own weight through the valve 24, the communication pipe 23 into the reservoir tank 14. When the heat exchange pipe 16 becomes empty, the valves 19, 24, 25 and 32 are closed.

In a cold environment, on the other hand, a material suitable for storing positive heat is used for the heat storage medium 15. When the air conditioner is not in use, the circulator 29 is connected to the heat exchange pipe 16 of the heat storage unit 2 so as to replace the water in the heat exchange pipe 16 with hot water, as shown in Fig. 1. In the condition as shown in Fig. 5, the peltier device 6 operates under the control of the controller 11 so as to release heat to the water in the first pipe 4 thereby to provide positive heat and also to absorb heat from the water in the delivery pipe 5 thereby to provide negative heat. As a result, the water flowing in the heat storage unit 2 is heated and positive heat is stored in the heat storage medium 15. On the other hand, although the water flowing in the first heat exchanger 3 is cooled, the first heat exchanger 3 absorbs heat from the surrounding air with the operation of the first blower 12, so that the water flowing in the delivery pipe 5 is heated.

When the air conditioner is in use, the positive heat stored in the heat storage medium 15 of the heat storage unit 2 is supplied to the second heat exchanger 60 through the water. In this case, the hot water heated by the heat storage medium 15 is not cooled by the water in the second heat exchanger 60, the first pipe 4, the second pipe 61 and the third pipe 62 which has not been cooled by the peltier device 6. Thus, the vehicle compartment is efficiently heated by the second heat exchanger 60.

As described above, the air conditioner according to the present embodiment allows efficient cooling and heating of a vehicle compartment without using a complicated heat source, which makes it easier to mount the air conditioner in a vehicle.

Additionally, the use of the peltier device 6 facilitates temperature controlling in the air conditioner.

The peltier device 6 located outside the heat storage unit 2 allows effective utilization of heat absorption and heat release in the peltier device 6, which results in efficient heating and cooling of the heat storage medium 15 in the heat storage unit 2. Further, the provision of the first and second heat exchangers 3 and 60 prevents unnecessary heating of the water cooled by the heat storage medium 15, as well as unnecessary cooling of the water heated by the heat storage medium 15, which allows efficient air conditioning in the vehicle compartment.

When the air conditioner is not in use, the water in the first outlet port 2A and the first inlet port 2B of the heat storage unit 2 is moved out thereof downward by its own weight and air flows into the first outlet port 2A and the first inlet port 2B, accordingly. In this case, the water in the heat storage unit 2 is exposed to the surrounding environment of the housing 21 through the air, which prevents the water from absorbing and releasing heat. Further, the heat storage tank 13 and the reservoir tank 14 are surrounded and insulated by the housing 21 and the vacuum insulator 22, which effectively prevents heat absorption of the heat storage medium 15 and the water and also heat release from the heat storage medium 15 and the water. Thus, the air conditioner according to the present embodiment allows heating and cooling for a long time even after being unused for a long time.

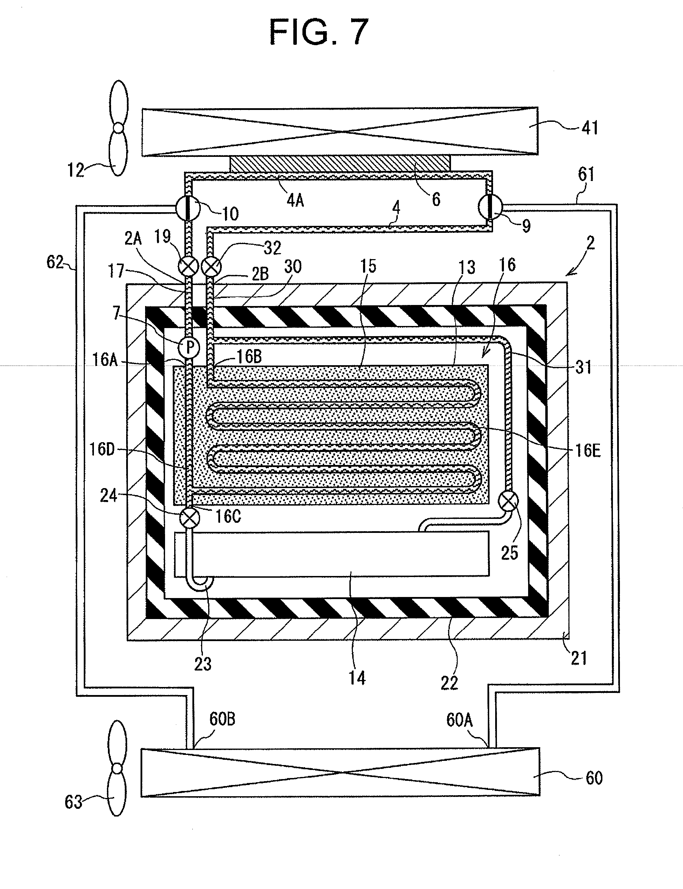

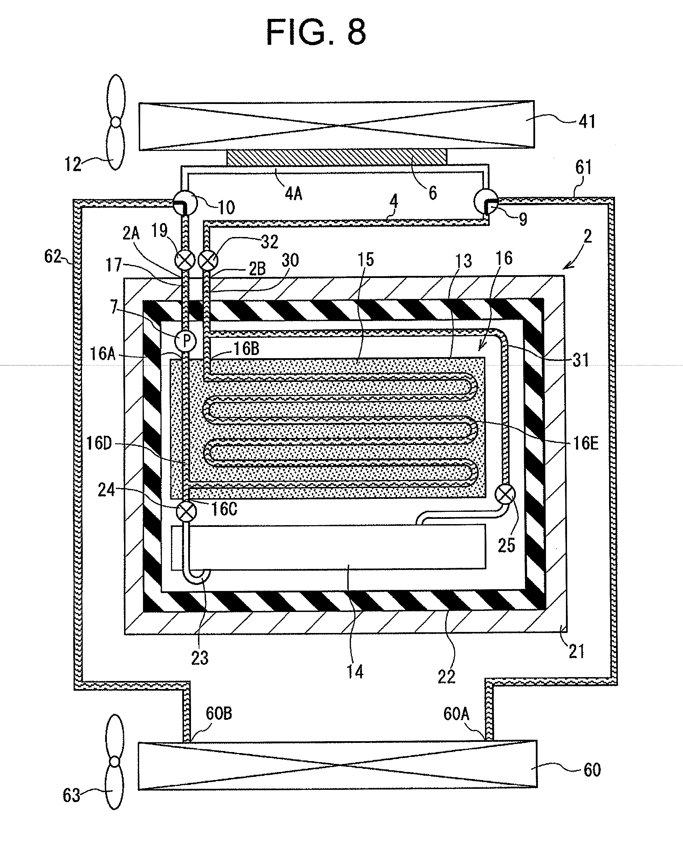

Figs. 7 and 8 show the second embodiment of the present invention. In the drawings, same reference numerals are used for the common elements or components in the first and second embodiments, and the description of such elements or components for the second embodiment will be omitted. The second embodiment differs from the first embodiment in that the first heat exchanger 41 corresponding to the first heat exchanger 3 of Fig. 3 is disposed in contact with one side of the peltier device 6.

In a hot environment, a material suitable for storing negative heat is used for the heat storage medium 15. The controller 11 operates the first and second valves 9 and 10 so that the first outlet port 2A is connected to the first inlet port 2B, the first outlet port 2A is disconnected from the second inlet port 60B and the second outlet port 60A is disconnected from the first inlet port 2B, as shown in Fig. 7.

In such condition, the peltier device 6 operates under the control of the controller 11 so as to absorb heat from the water in the first pipe 4 thereby to provide negative heat and also to release heat to the first heat exchanger 41 thereby to provide positive heat. As a result, the water flowing in the heat storage unit 2 is cooled and negative heat is stored in the heat storage medium 15. On the other hand, although the first heat exchanger 41 is heated, the heat of the first heat exchanger 41 is released by the first blower 12 into the surrounding air, so that the first heat exchanger 41 is cooled.

When the air conditioner is in use, the first and second valves 9 and 10 are operated by the controller 11 so that the first outlet port 2A is connected to the second inlet port 60B and the second outlet port 60A is connected to the first inlet port 2B, as shown in Fig. 8. The negative heat stored in the heat storage medium 15 of the heat storage unit 2 is supplied to the second heat exchanger 60 through the water, and the vehicle compartment is cooled by the second heat exchanger 60.

In a cold environment, a material suitable for storing positive heat is used for the heat storage medium 15. The peltier device 6 operates under the control of the controller 11 so as to release heat to the water in the first pipe 4 thereby to provide positive heat and also to absorb heat from the first heat exchanger 41 thereby to provide negative heat. As a result, the water flowing in the heat storage unit 2 is heated and positive heat is stored in the heat storage medium 15. On the other hand, although the first heat exchanger 41 is cooled, the first heat exchanger 41 absorbs heat from the surrounding air and is heated.

When the air conditioner is in use, the positive heat stored in the heat storage medium 15 of the heat storage unit 2 is supplied to the second heat exchanger 60 through the water, and the vehicle compartment is heated by the second heat exchanger 60.

Thus, the second embodiment offers advantages similar to those of the first embodiment.

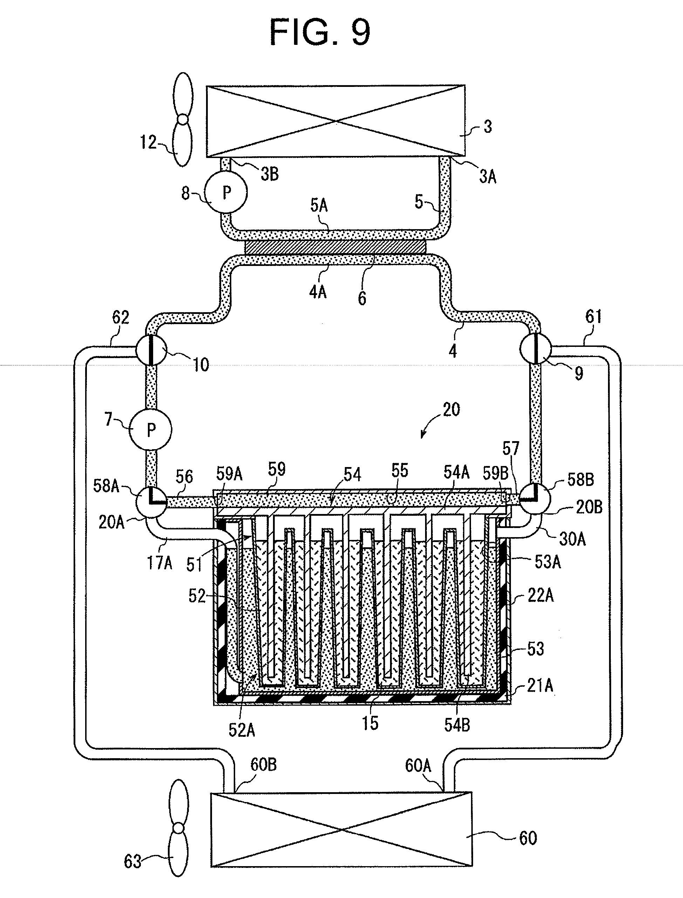

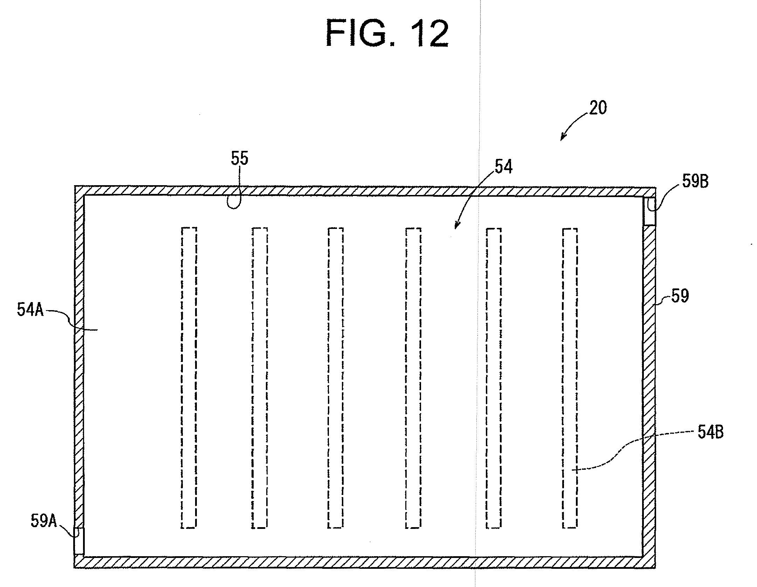

Figs. 9, 10, 11 and 12 show the third embodiment of the present invention. In the drawings, same reference numerals are used for the common elements or components in the first and third embodiments, and the description of such elements or components for the third embodiment will be omitted. The third embodiment differs from the first embodiment in that the first pump 7 is provided in the first pipe 4 and the heat storage unit 20 replaces the heat storage unit 2 of Fig. 3.

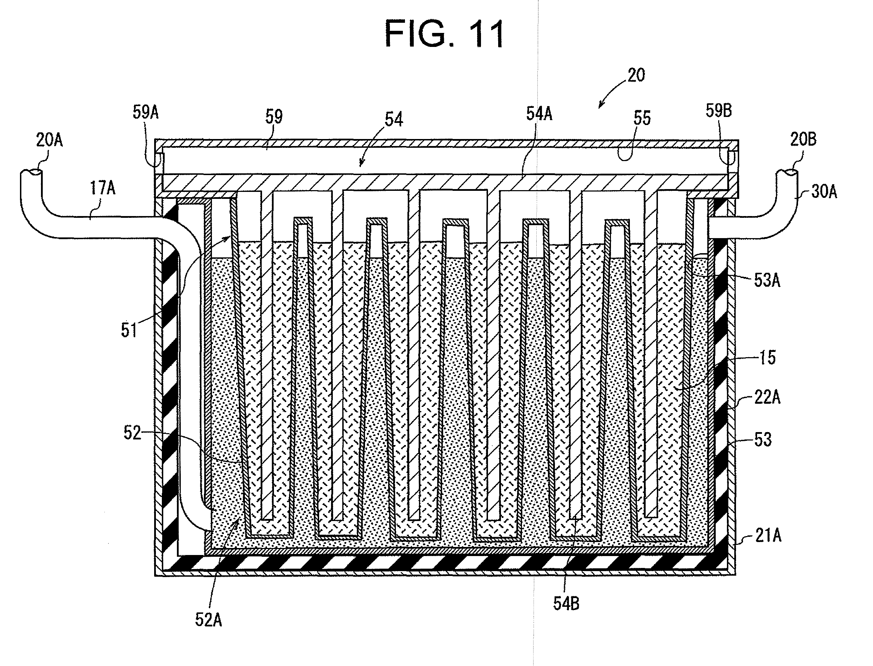

Referring to Fig. 11, the heat storage unit 20 includes a housing 21A, a reservoir tank 53 and a heat storage section 51, A vacuum insulator 22A is mounted on the inner surface of the housing 21A. The reservoir tank 53 is fixed in the housing 21A. The interior of the reservoir tank 53 forms a storage space 53A for storing therein antifreeze liquid.

In the housing 21A and the vacuum insulator 22A, an outlet pipe 17A is connected to the lower portion of the reservoir tank 53 on one side thereof. The outlet pipe 17A extends upward and then horizontally through the vacuum insulator 22A and the housing 21A and has an opening facing upward and serving as a first outlet port 20A, as shown in Fig. 11.

In the housing 21A and the vacuum insulator 22A, an inlet pipe 30A is connected to the upper portion of the reservoir tank 53 on the other side thereof. The inlet pipe 30A extends horizontally through the vacuum insulator 22 and the housing 21 and has an opening facing upward and serving as a first inlet port 20B.

The heat storage section 51 includes a heat storage tank 52, a jacket 59 and a heat transfer member 54. The heat storage tank 52 has plural recesses 52A each of which holds therein the heat storage medium 15.

The jacket 59 is integrated with the heat storage tank 52. The heat transfer member 54 is made of copper and mounted to the bottom of the jacket 59. The heat transfer member 54 includes a plate-shaped base 54A and plural fins 54B extending downward from the base 54A. Each fin 54B extends into the recess 52A and is in contact with the heat storage medium 15.

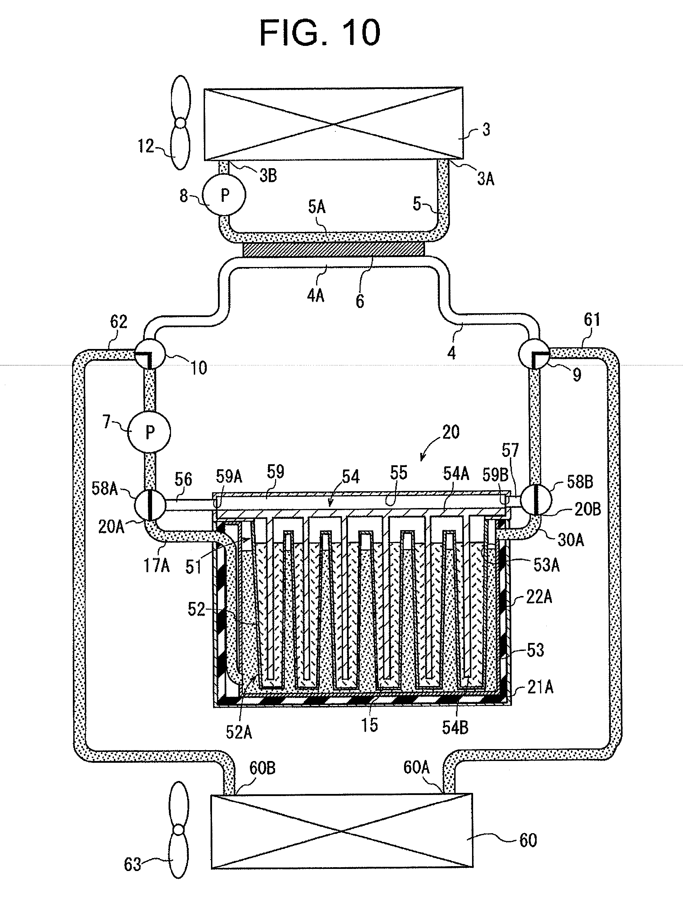

As shown in Figs. 9 and 10, the jacket 59 forms therein a flow passage 55 extending above the heat transfer member 54. The flow passage 55 has a third outlet port 59A connected to a fourth pipe 56 and a third inlet port 59B connected to a fifth pipe 57.

The upstream end of the first pipe 4 as viewed in the flow direction of antifreeze liquid, the outlet pipe 17A and the fourth pipe 56 are connected to a third valve 58A. The opposite downstream end of the first pipe 4, the inlet pipe 30A and the fifth pipe 57 are connected to a fourth valve 58B. Each of the third and fourth valves 58A and 58B is provided by a three-way valve and connected to the controller 11.

In a hot environment, a material suitable for storing negative heat is used for the heat storage medium 15. When the air conditioner is not in use, the controller 11 operates the first and the second valves 9 and 10 and the third and fourth valves 58A and 58B so that the third outlet port 59A and the third inlet port 59B are connected to the first pipe 4, the first outlet port 20A is disconnected from the second inlet port 60B and the second outlet port 60A is disconnected from the first inlet port 20B, as shown in Fig. 9. The first outlet port 20A is also disconnected from the first inlet port 20B. The first outlet port 20A is disconnected from the third outlet port 59A, and the first inlet port 20B is disconnected from the third inlet port 59B.

In such condition, under the control of the controller 11, the first pump 7 circulates the antifreeze liquid in the first pipe 4, and the peltier device 6 is operated so as to absorb heat from the antifreeze liquid in the first pipe 4 thereby to provide negative heat. The antifreeze liquid in the first pipe 4 is cooled and then delivered through the third inlet port 59B into the flow passage 55 of the jacket 59, where heat is exchanged through the fins 54B of the heat transfer member 54 between the antifreeze liquid and the heat storage medium 15 in the recess 52A. The antifreeze liquid is then delivered through the third outlet port 59A into the first pipe 4.

When the air conditioner is in use, the first and second valves 9 and 10 and the third and fourth valves 58A and 58B are operated by the controller 11 so that the first outlet port 20A is connected to the second inlet port 60B, the second outlet port 60A is connected to the first inlet port 20B, the first outlet port 20A is disconnected from the first inlet port 20B, and the third outlet port 59A and the third inlet port 59B are disconnected from the first pipe 4, as shown in Fig. 10. The negative heat stored in the heat storage medium 15 of the heat storage unit 20 is supplied to the second heat exchanger 60 through the antifreeze liquid, and the vehicle compartment is cooled by the second heat exchanger 60.

In a cold environment, a material suitable for storing positive heat is used for the heat storage medium 15. When the air conditioner is not in use, the peltier device 6 is operated under the control of the controller 11 so as to release heat to the antifreeze liquid in the first pipe 4 thereby to provide positive heat. The antifreeze liquid in the first pipe 4 is heated and then delivered through the third inlet port 59B into the flow passage 55 of the jacket 59, where heat is exchanged through the fins 54B of the heat transfer member 54 between the antifreeze liquid and the heat storage medium 15 in the recess 52A. The antifreeze liquid is then delivered through the third outlet port 59A into the first pipe 4.

When the air conditioner is in use, the positive heat stored in the heat storage medium 15 of the heat storage unit 2 is supplied to the second heat exchanger 60 through the antifreeze liquid, and the vehicle compartment is heated by the second heat exchanger 60.

According to the third embodiment, the heat transfer member 54 is made of copper and the fins 54B are in contact with the heat storage media 15 in the respective recesses 52A. Heat of the antifreeze liquid flowing through the flow passage 55 is quickly stored in the heat storage medium 15 through the heat transfer member 54. That is, heat is stored in the heat storage medium 15 more rapidly, as compared to the case where heat is stored in the heat storage medium 15 only through the antifreeze liquid in the storage space 53A.

Particularly, when the air conditioner according to the present embodiment is not in use, the controller 11 operates the third and fourth valves 58A and 58B so that the third outlet port 59A is connected to the third inlet port 59B and the first outlet port 20A is disconnected from the first inlet port 20B, as shown in Fig. 9. By doing so, the outlet pipe 17A and the inlet pipe 30A are disconnected from the first pipe 4, and air insulation layer is formed in the outlet pipe 17A and the inlet pipe 30A. As a result, the antifreeze liquid in the reservoir tank 53 is insulated by such air, which effectively prevents positive heat or negative heat stored in the antifreeze liquid in the reservoir tank 53 from being released outside the heat storage unit 20.

The heat storage tank 52 has the recesses 52A each of which holds therein the heat storage medium 15, and the fins 54B of the heat transfer member 54 extend from the jacket 59 into the respective recesses 52A. In this case, the surface area of the heat storage tank 52 becomes large and, therefore, the antifreeze liquid in the storage space 53A is efficiently heated and cooled. Further, the heat storage medium 15 in each recess 52A can store positive heat or negative heat of the antifreeze liquid flowing in the flow passage 55, which allows positive heat or negative heat to be stored more quickly in the heat storage medium 15. Additionally, the third embodiment offers advantages similar to those of the first embodiment.

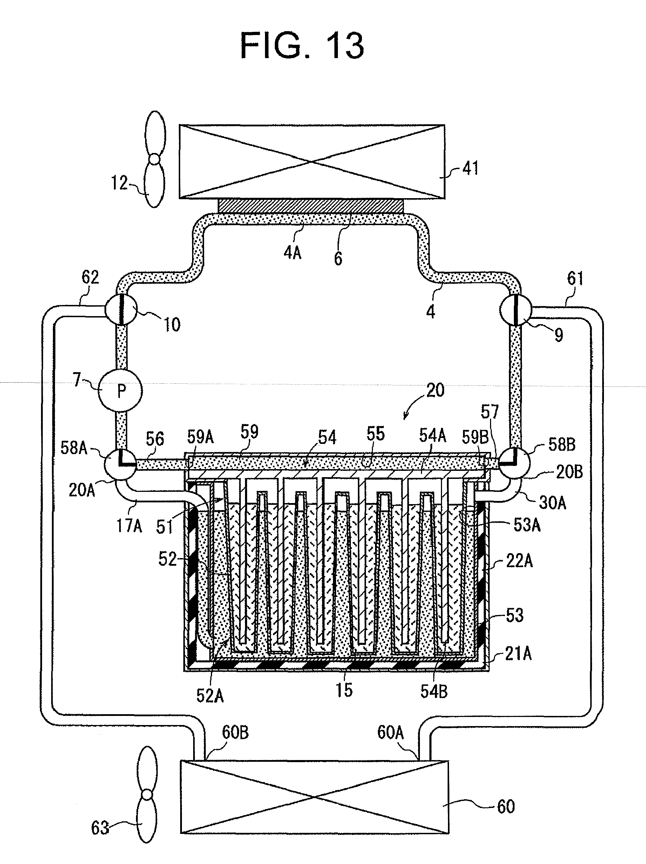

Fig. 13 shows the fourth embodiment of the present invention. The fourth embodiment differs from the second embodiment in that the heat storage unit 20 of Fig. 9 is used in place of the heat storage unit 2 of Fig. 7.

The fourth embodiment offers advantages similar to those of the second and third embodiments.

The above embodiments may be modified in various ways as exemplified below.

For the heat storage medium 15 of the heat storage units 2 and 20, a material capable of storing positive heat such as paraffin, calcium chloride hydrate, sodium sulfate hydrate, sodium thiosulfate hydrate, or sodium acetate hydrate may be used, and a material capable of storing negative heat such as sodium polyacrylate, also known as cold storage medium, may be used.

An electric heater may be provided for heating the heat storage medium 15. Additionally, a hot water heater, which includes a pipe where heat exchange medium such as hot water is flown, may be provided for heating the heat storage medium 15. A cold water heater, which includes a pipe where heat exchange medium such as cold water is flown, may be provided for cooling the heat storage medium 15.

The insulation of the interior of the housing 21 (21A) may be accomplished not only by the vacuum insulator 22 (22A), but also by expanded polystyrene foam, glass wool, air or vacuum.

Any suitable heater or cooler may be provided for heating or cooling the water in the reservoir tank 14 and the antifreeze liquid in the reservoir tank 53.

In the first and second embodiments, the valve 19 may be provided by a three-way valve connecting to the third pipe 62, and the valve 32 may be provided by a three-way valve connecting to the second pipe 61.

The present invention may be applied to a hybrid vehicle or an electric vehicle.

A vehicle air conditioner includes a heat storage unit having a heat storage medium, a first heat exchanger for heat exchange with air that is sent out of the vehicle, a second heat exchanger for heat exchange with air that is sent to the vehicle compartment, and a peltier device. The heat storage unit has a first inlet port and a first outlet port through which heat exchange medium flows in and out of the heat storage unit where heat is exchanged between the heat storage medium and the heat exchange medium. The peltier device is operable to provide one of positive heat and negative heat to the heat exchange medium flowing through the heat storage unit and also to provide the other of the positive heat and the negative heat directly or indirectly to the first heat exchanger.

## Claims

1. A vehicle air conditioner including a heat storage unit (2) having a heat storage medium (15) thermally insulated from the outside, the heat storage unit (2) having a first inlet port (2B) and a first outlet port (2A) through which heat exchange medium flows in and out of the heat storage unit (2) where heat is exchanged between the heat storage medium (15) and the heat exchange medium,
the vehicle air conditioner **characterized by**
a first pipe (4) connected to the first outlet port (2A) and the first inlet port (2B);
a first heat exchanger (3) for heat exchange with air that is sent out of the vehicle;
a second heat exchanger (60) for heat exchange with air that is sent to the vehicle compartment, the second heat exchanger (60) having a second inlet port (60B) and a second outlet port (60A) through which the heat exchange medium flows in and out of the second heat exchanger (60);
a first valve (9) and a second valve (10) respectively provided on the first pipe (4);
a second pipe (61) connecting the second outlet port (60A) to the first valve (9);
a third pipe (62) connecting the second inlet port (60B) to the second valve (10);
a peltier device (6) operable to provide one of positive heat and negative heat to the heat exchange medium flowing in the first pipe (4) and also to provide the other of the positive heat and the negative heat directly or indirectly to the first heat exchanger (3);
a first pump (7) for delivering the heat exchange medium in the first pipe (4); and
a controller (11) for controlling the operation of the peltier device (6), the first valve (9) and the second valve (10),
wherein when the air conditioner is not in use the first and second valves (9, 10) are operated so that the first outlet port (2A) is connected to the first inlet port (2B), the first outlet port (2A) is disconnected from the second inlet port (60B), and the second outlet port (60A) is disconnected from the first inlet port (2B),
wherein when the air conditioner is in use the first and second valves (9, 10) are operated so that the first outlet port (2A) is connected to the second inlet port (60B), the second outlet port (60A) is connected to the first inlet port (2B), and the first pipe (4) between the first outlet port (2A) and the first inlet port (2B) is disconnected.

2. The vehicle air conditioner according to claim 1, wherein the peltier device (6) is provided outside the heat storage unit (2).

3. The vehicle air conditioner according to claim 1 or 2, wherein the first heat exchanger (3) has a fluid inlet port (3B) and a fluid outlet port (3A) connected to each other by a delivery pipe (5) through which heat exchange medium is delivered by a second pump (8), the peltier device (6) is operable to provide the other of the positive heat and the negative heat to the first heat exchanger (3) through the heat exchange medium flowing in the delivery pipe (5).

4. The vehicle air conditioner according to claim 3, wherein one side of the peltier device (6) is in contact with the first pipe (4) and the other side of the peltier device (6) is in contact with the delivery pipe (5).

5. The vehicle air conditioner according to any one of claims 1 through 4, wherein the heat storage unit (20) includes a housing (21A) thermally insulating the heat storage medium (15) from the outside and having a capability for storing heat exchange medium that is delivered to and from the second heat exchanger (60), a heat storage tank (52) mounted in the housing (21A) and holding therein the heat storage medium (15), a jacket (59) integrally provided with the heat storage tank (52) and having a flow passage (55) connected to the first pipe (4), and a heat transfer member (54) mounted to the jacket (59) and in contact with the heat storage medium (15), the heat transfer member (54) being brought into contact with the heat exchange medium flowing through the flow passage (55).

6. The vehicle air conditioner according to claim 5, further comprising a third valve (58A) provided at the upstream end of the first pipe (4) and a fourth valve (58B) at the downstream end of the first pipe (4) as viewed in flow direction of the heat exchange medium, wherein the flow passage (55) has a third outlet port (59A) connected to the third valve (58A) and a third inlet port (59B) connected to the fourth valve (58B), when the air conditioner is not in use the third and fourth valves (58A, 58B) are operated so that the third outlet port (59A) and the third inlet port (59B) are respectively connected to the first pipe (4), the first outlet port (20A) is disconnected from the third outlet port (59A) and the first inlet port (20B) is disconnected from the third inlet port (59B), when the air conditioner is in use the third and fourth valves (58A, 58B) are operated so that the first outlet port (20A) is connected to the second inlet port (60B), the second outlet port (60A) is connected to the first inlet port (20B), and the third outlet port (59A) and the third inlet port (59B) are disconnected from the first pipe (4).

7. The vehicle air conditioner according to claim 5 or 6, wherein the heat storage tank (52) has plural recesses (52A) each of which holds therein the heat storage medium (15), the heat transfer member (54) extending from the jacket (59) into the respective recesses (52A).

8. The vehicle air conditioner according to claim 1 or 2, wherein the heat storage unit (2) has a heat exchange pipe (16) extending through the heat storage medium (15) and connected to the first outlet port (2A) and the first inlet port (2B), and a reservoir tank (14) connected to the heat exchange pipe (16) through a valve (24, 25) and having a capability for storing heat exchange medium, when the air conditioner is not in use the valve (24, 25) is operated by the controller (11) so that heat exchange medium flows out of the heat exchange pipe (16) into the reservoir tank (14).

9. The vehicle air conditioner according to claim 8, wherein when the air conditioner is not in use the heat exchange pipe (16) is connected to a circulator (29) for replacement of heat exchange medium existing in the heat exchange pipe (16).
